Europäisches Patentamt

European Patent Office

Office européen des brevets

(19)

(11) Veröffentlichungsnummer: **0 391 243**
**A2**

(12) # EUROPÄISCHE PATENTANMELDUNG

(21) Anmeldenummer: 90105971.7

(22) Anmeldetag: 29.03.90

(51) Int. Cl.⁵: **B01D 33/23, D21D 5/02**

(30) Priorität: 07.04.89 DE 8904306 U

(43) Veröffentlichungstag der Anmeldung:
**10.10.90 Patentblatt 90/41**

(84) Benannte Vertragsstaaten:
**AT BE CH DE DK ES FR GB GR IT LI LU NL SE**

(71) Anmelder: **HEINRICH FIEDLER GMBH & CO KG**
**Weidener Strasse 9**
**D-8400 Regensburg 12(DE)**

(72) Erfinder: **Knodel, Waldemar**
**Ziegelackerweg 16**
**D-8401 Pentling(DE)**
Erfinder: **Einöder, Norbert**
**Hauptstrasse 18**
**D-8409 Tegernheim(DE)**

(74) Vertreter: **Wasmeier, Alfons et al**
**Patent Attorneys A. Wasmeier H. Graf**
**Postfach 382 Greflingerstrasse 7**
**D-8400 Regensburg 1(DE)**

(54) **Aus einzelnen Scheibenfiltersegmenten bestehendes Scheibenfilter.**

(57) Bei aus einzelnen Scheibenfiltersegmenten bestehenden Scheibenfiltern zum Ausfiltern von Feststoffen besteht jedes einzelne Scheibenfilterelement aus einem segmentförmigen Oberteil und einem damit verbundenen segmentförmigen Unterteil, die beide miteinander einen segmentförmigen Kanal darstellen, wobei Oberteil und Unterteil Lochungen für den Austritt der ausgefilterten Flüssigkeit aufweisen. Bei derartigen Scheibenfiltersegmenten sind zur Er- zielung einer erhöhten Festigkeit bzw. Steifigkeit der Filtersegmente auf der Oberseite und der Unterseite des Filtersegmentes die Lochungen versteift ausgebildet, vorzugsweise nach einer Seite durchgezogen bzw. durchgedrückt, und das Verhältnis von freier Oberfläche zu Gesamtoberfläche auf der Oberseite und der Unterseite des Filtersegmentes hat mindestens einen Wert von 50 %.

Fig.4

EP 0 391 243 A2

## Aus einzelnen Scheibenfiltersegmenten bestehendes Scheibenfilter

Die Erfindung bezieht sich auf ein aus einzelnen Scheibenfiltersegmenten bestehendes Scheibenfilter nach dem Oberbegriff des Anspruches 1.

Auf den verschiedensten Gebieten der Technik werden zum Herausfiltern bzw. Trennen von Feststoffen aus in fließfähigem Zustand anfallenden Materialien Scheibenfilter verwendet, z.B. zum Entwässern von Suspensionen, von Papierbrei oder dergl. Auf diesem Gebiet sind insbes. zu einem Scheibenfilter zusammengesetzte Scheibenfiltersegmente bekannt, deren jedes aus einem Oberteil und einem damit verbundenen Unterteil besteht, die beide miteinander so verbunden sind, daß ein geschlossener, segmentförmiger, sich vom Einlauf zum Auslauf erweiternder Kanal entsteht, der auf seiner Oberseite und seiner Unterseite mit Lochungen versehen ist. Aus Stabilitätsgründen muß die Wandstärke eines solchen Filterelementes groß sein oder mit Verstärkungsrippen versehen werden.

Derartige Scheibenfiltersegmente sind z.B. aus der US-PS 4 162 982 bekannt. Die Sektorplatten weisen hierbei Durchbrechungen auf, die herkömmliche zylindrische Lochungen bzw. Bohrungen sind, deren Umfangsränder auf die Ebene der Plattenoberseite und -unterseite beschränkt sind. Damit haben derartige Lochungen keinerlei versteifende Wirkung.

Ferner ist aus der DE-OS 26 29 063 ein Filterelement für rotierbare Scheibenfilter bekannt, bei dem anstelle eines Stützgitters ein Buckelblech verwendet wird, zwischen dessen Buckeln das Filtrat abfließen kann.

Weiterhin ergibt sich aus der DE-PS 30 33 423 ein aus Kunststoff bestehendes Blatt für Scheibenfilter, das zwischen Stützwänden aufgenommen wird, so daß eine gewünschte erhöhte Steifigkeit nicht durch die Ausbildung des Blattes selbst erzielt wird. Das Verhältnis von freier Oberfläche zu Gesamtoberfläche ist, wie auch bei den vorstehend genannten Druckschriften, erheblich kleiner als 50 %. Die Steifigkeit des Blattes ist extrem gering und spielt für diese Art von Blatt auch keinerlei Rolle, da die Steifigkeit durch die Stützwände erreicht wird.

Gegenstand der US-PS 1 949 998 ist eine Vorrichtung zum Entwässern von Pulpe oder dergl. Material, das in einer Siebtrommel aufgenommen ist. Der Mantel der Siebtrommel weist Perforationen auf, die so nahe zueinander angeordnet sind, daß etwa 50 % der Mantelfläche offen sind. Die Perforationen bzw. Lochungen werden durch Stanzen oder Drücken des ebenen Metallbleches hergestellt und anschliessend erst in die zylindrische Form gebracht. Die Löcher werden in der Weise gestanzt, daß die Stanzbewegung von der Außenfläche zur Innenfläche des Metallbleches erfolgt und eine leichte Deformation des Materials um die Perforierung zugelassen wird. Dieses Deformieren der Lochungen auf der Seite, die nach außen gerichtet ist, dient dem Zweck, daß die Pulpe frei in das Zylinderinnere strömen kann, nicht jedoch zu Stabilisierzwecken, und ist ausschließlich für Zylindertrommeln bestimmt.

Aus der US-PS 2 910 183 ist ein aus halbzylindrischen Hälften und einzelnen rechteckförmigen Elementen innerhalb dieser Hälften bestehender Trommelfilter für die Nahrungsmittelindustrie, z.B. für Saftpressen, bekannt. Die Siebflächen weisen jeweils eine Vielzahl von symmetrisch verteilten Öffnungen auf, die den Boden einer honigwabenförmigen Kammer bilden. Die Deformierungen der Trägerplatte und das Ausbilden der Lochungen erfolgt durch einen Stanzvorgang. Die Formgebung der Vertiefungen mit an deren Enden vorgesehenen Lochungen entspricht nicht einer Versteifung der Lochungen, bei der Innenränder der Lochungen selbst tiefgezogen werden, um die gewünschte Versteifung zu erreichen. Auch läßt sich mit dieser Art von Lochungen bei weitem nicht ein Verhältnis von freier Oberfläche zur Gesamtoberfläche von etwa 50 % erreichen.

Bei einem Kunststoffträger für Siebmaschinen mit Feinlochsiebblechen nach der DE-PS 872 723 werden auf Kunststoffplattenträgern Metallsiebbeläge aufgelegt und mittels Wärme und Druck in das thermoplastische Material eingedrückt. Anstelle glatter Kunststoffstützplatten werden solche verwendet, an denen die Ränder der Durchbrechungen nach unten vom Sieb weg durchgedrückt sind, um eine höhere Versteifung der Kunststoffstützplatte zu erreichen. Die Siebbeläge selbst werden hierbei jedoch nicht durchgedrückt.

Aufgabe der Erfindung ist es, Scheibenfiltersegmente für Scheibenfilter zu schaffen, die einen hohen prozentualen Anteil an freier Oberfläche haben, die eine hohe Steifigkeit bei möglichst geringer Materialstärke und damit ein möglichst geringes Gewicht besitzen, und die rationell und preiswert zu fertigen sind.

Gemäß der Erfindung wird dies dadurch erreicht, daß die Lochungen auf der Oberseite und der Unterseite eines jeden Filtersegmentes versteift ausgebildet sind, und daß das Verhältnis von freier Oberfläche zur Gesamtoberfläche ca. 50 % oder darüber beträgt. Die versteifte Ausbildung der Lochungen erfolgt vorzugsweise dadurch, daß die Lochungen nach einer Seite durchgezogen bzw. durchgedrückt sind, so daß der Randbereich der Lochung in der Druckrichtung kragenförmig über die Ebene der Fläche des Segmentes vorsteht. Die Lochungen sind kreisrund oder in anderer, symmetrischer Form ausgebildet; die Formgebung ist dadurch bestimmt, daß sichergestellt sein muß, daß das Material beim Durchziehen bzw. Durchpressen nicht ausreißt, da dadurch die erwünschte hohe Steifigkeit verloren gehen würde.

Mit der Erfindung wird erreicht, daß Filtersegmente mit versteiften bzw. durchgezogenen Lochungen gegenüber nicht durchgezogenen Lochungen eine erhebliche Verstärkung und erhöhte Steifigkeit haben und durch Wahl einer geringeren Wandstärke und deutlich weniger Längsrippen eine wesentliche Gewichtseinsparung erzielt wird. Die Lochungen sind dabei aufgrund der erzielbaren höheren Steifigkeit so angeordnet, daß eine bis zu 50 %ige oder sogar darüberliegende freie Oberfläche erreicht wird, die ein Höchstmaß an Filterwirkung ergibt.

Eine weitere Verbesserung besteht darin, daß sich durch die abgerundeten Kanten und durchgezogenen Lochungen eine wesentlich längere Standzeit des Kunststoffgewebes ergibt, mit dem die Scheibenfiltersegmente überzogen sind. Bei herkömmlichen Lochungen, wie einfachen Rundlochungen oder Kiemenlochungen, ergeben sich scharfe Kanten, die zu einem frühzeitigen Verschleiß des Gewebes führen. Die Belastung des Gewebes in diesem Bereich wird hervorgerufen durch die permanenten Druckwechsel von 0 auf ca. 0,5 - 1 bar bei permanentem Aus- und Eintauchen in die Suspension.

Die Erzielung derartiger versteifter bzw. durchgezogener Lochungen, vorzugsweise Rundlochungen, erfolgt in rationeller Fertigung in der Weise, daß die die Lochungen begrenzende Wand aus der Ebene der Oberseite und Unterseite gedrückt bzw. gezogen wird, so daß am Rand der Lochung ein ringförmiger, in Umfangsrichtung geschlossener Kragen entsteht, der eine entscheidende Versteifung an dieser Stelle der Platte ergibt.

Grundsätzlich sind derartige Lochungen bekannt, z.B. bei Waschmaschinentrommeln, um eine Verletzungsgefahr zu begrenzen, oder - wenn das Durchziehen in der entgegengesetzten Richtung erfolgt - um eine Rutschgefahr auszuschalten. Sinn und Zweck dieser Lochungen sind jedoch bei diesen Anwendungsfällen grundsätzlich verschieden von denen der Erfindung, bei der es insbes. in der Anwendung auf die Entwässerung von Suspensionen bzw. Breien in der Papiertechnik ausschließlich darauf ankommt, durch das Durchziehen bzw. Durchdrücken der Lochungen eine hohe Steifigkeit der Platte, eine möglichst große freie Fläche in Relation zur Gesamtfläche, ein möglichst geringes Gewicht des einzelnen Filtersegmentesund damit des gesamten Scheibenfilters sowie eine daraus resultierende Kostenreduzierung zu erreichen. Mit der Erfindung wird somit ein ausgewogenes Verhältnis zwischen Steifigkeit und freier Oberfläche geschaffen und eine optimale Konstruktion für das Scheibenfilter erzielt, außerdem wird die Standzeit des Gewebes verbessert.

Des weiteren sind bei derartigen Scheibenfiltersegmenten bereits sogenannte "Kiemenlochungen" bekannt, die ebenfalls durchgezogen ausgebildet sind. Bei diesen Kiemenlochungen ist der Anteil der freien Oberfläche (Lochungen) zur Gesamtoberfläche wesentlich geringer, so daß der Filterungseffekt relativ begrenzt ist. Auch ist die dabei erzielte Stabilität erheblich geringer bzw. muß eine wesentlich größere Materialstärke verwendet werden, um gleiche Stabilität zu erreichen.

Nachstehend wird die Erfindung in Verbindung mit der Zeichnung anhand eines Ausführungsbeispieles erläutert. Es zeigt:

Fig. 1 eine Prinzipdarstellung eines Scheibenfilters a) in Stirnansicht, b) in Seiten-Schnittansicht,

Fig. 2 eine Aufsicht auf ein bekanntes Scheibenfiltersegment mit Kiemenlochung,

Fig. 3 eine Aufsicht auf ein Scheibenfiltersegment nach der Erfindung mit kreisförmigen Lochungen,

Fig. 4 eine perspektivische schematische Darstellung eines Scheibenfiltersegmentes nach der Erfindung, und

Fig. 5 in vergrößertem Maßstab eine durchgezogene Lochung.

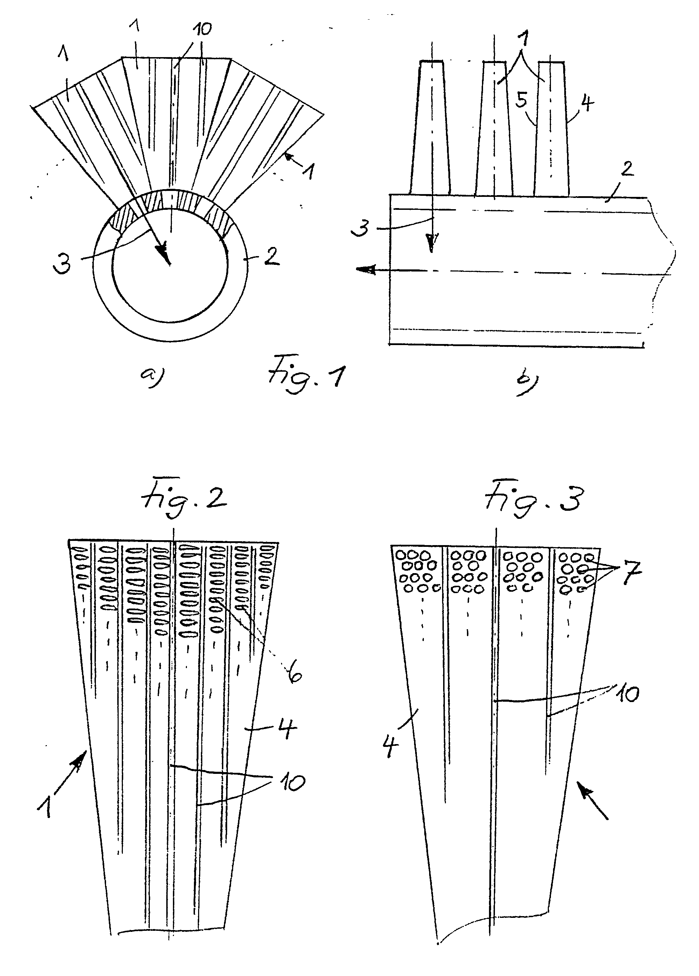

In Fig. 1 ist ein aus einzelnen Scheibenfiltersegmenten 1 bestehendes Scheibenfilter (in seitlicher Ansicht) in Betriebsstellung mit einer das zu filternde Material aufnehmenden Hohlwelle 2 befestigt dargestellt. Der Materialfluß ist mit Pfeil 3 angedeutet. Mit 4 ist die Oberseite, mit 5 die Unterseite bezeichnet. Das Segment 1 ist nach Fig. 2 (Aufsicht) mit Kiemenlochungen 6 versehen, während eine entsprechend der Fig. 2 gezeichnete Darstellung nach Fig. 3 durchgezogene, Oberseite und Unterseite versteifende kreisförmige Lochungen 7 aufweist.

Ein Scheibenfiltersegment nach der Erfindung ist in perspektivischer Ansicht in Fig. 4 gezeigt. Die Lochungen 7 auf der Oberseite 4 und entsprechende Lochungen 7 auf der Unterseite 5 dienen zum Abführen der herausgefilterten Flüssigkeit. Die Oberseite 4 ist Teil eines im Querschnitt U-förmigen Oberteiles 8, die Unterseite 5 Teil eines im Querschnitt U-förmigen Unterteiles 9. Oberteil 8 und Unterteil 9 sind in an sich bekannter Weise so zusammengefügt, daß ein Durchströmkanal entsteht. Zur weiteren Versteifung von Oberseite 4 und Unterseite 5 können ein oder mehrere zusätzliche Längsrippen 10 vorgesehen sein.

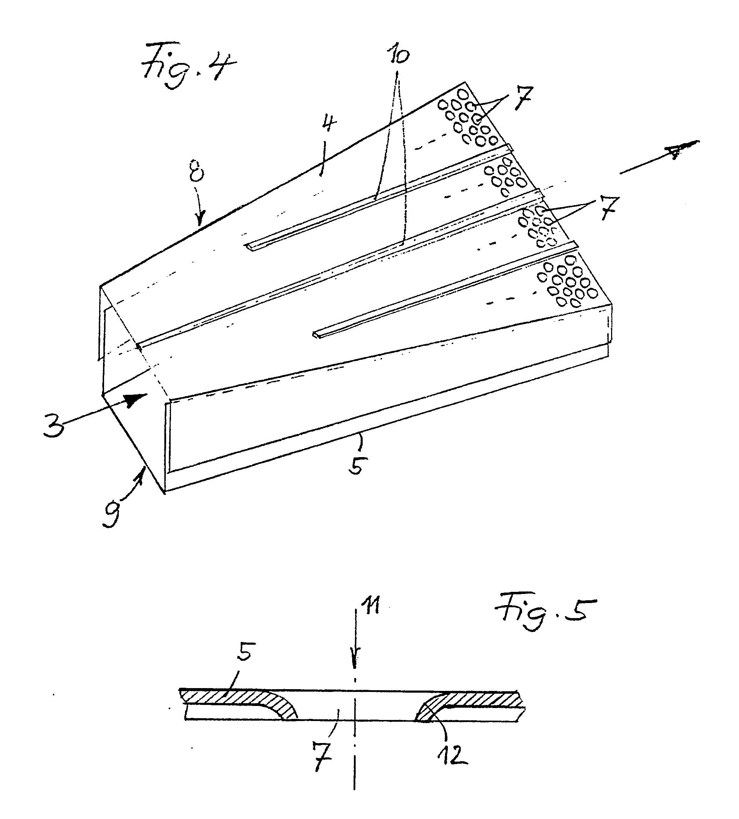

In Fig. 5 ist schematisch und im Schnitt eine durchgezogene bzw. durchgedrückte Lochung 7 näher dargestellt. Das Durchziehen bzw. Durchdrücken der Lochung 7 erfolgt in Pfeilrichtung 11 unter Materialverformung, so daß die Randbegrenzung der Lochung 7 in Form eines in Druck- bzw. Ziehrichtung verlaufenden Kragens 12 ausgebildet wird, der die erhöhte Steifigkeit bewirkt.

## Ansprüche

1. Aus einzelnen Scheibenfiltersegmenten bestehendes Scheibenfilter zum Ausfiltern von Feststoffen aus fließfähigen Medien, insbes. für die Papierindustrie, wobei jedes einzelne Scheibenfilterelement aus einem segmentförmigen Oberteil und einem mit diesem verbundenen segmentförmigen Unterteil besteht, die beide miteinander einen den Filter darstellenden segmentförmigen Kanal bilden und die auf ihrer Oberseite und ihrer Unterseite Lochungen für den Austritt der ausgefilterten Flüssigkeit aufweisen,
**dadurch gekennzeichnet**, daß zur Erzielung einer erhöhten Festigkeit bzw. Steifigkeit der Filtersegmente (1) auf der Oberseite (4) und der Unterseite (5) des Filtersegmentes die Lochungen (7) versteift ausgebildet sind, und daß das Verhältnis von freier Oberfläche zur Gesamtoberfläche auf der Oberseite und der Unterseite des Filtersegmentes einen Wert von ca. 50% oder darüber hat.

2. Scheibenfiltersegment nach Anspruch 1, dadurch gekennzeichnet, daß die Lochungen (7) nach einer Seite durchgezogen bzw. durchgedrückt sind.

3. Scheibenfiltersegment nach Anspruch 1 oder 2, dadurch gekennzeichnet, daß die Lochungen (7) kreisrunde Form haben.

4. Scheibenfiltersegment nach einem der Ansprüche 1 - 3, dadurch gekennzeichnet, daß die Lochungen teilweise durchgezogen und teilweise nicht durchgezogen ausgebildet sind und daß die unterschiedlichen Typen von Lochungen miteinander nach einem vorgegebenen Schema entsprechend dem gewünschten Verhältnis von Steifigkeit zu freier Oberfläche abwechseln.

5. Scheibenfiltersegment nach einem der Ansprüche 1 - 3, dadurch gekennzeichnet, daß die Lochungen in abwechselnden Reihen durchgezogen und nicht durchgezogen ausgebildet sind.

6. Scheibenfiltersegment nach einem der Ansprüche 1 - 5, dadurch gekennzeichnet, daß der Umfangsrand der Lochungen (7) in Durchzieh- bzw. in Durchdrückrichtung kragenförmig deformiert ausgebildet ist.

a)                    Fig.1                    b)

Fig.2                    Fig.3

Fig. 4

Fig. 5